# EUROPEAN PATENT SPECIFICATION

(11) **EP 2 418 976 B1**
(45) Date of publication and mention of the grant of the patent: **25.06.2014**
(21) Application number: 10765226.5
(22) Date of filing: 16.04.2010
(51) Int. Cl.: A41D 31/00, C08L 29/04, C08F 216/06, D06M 15/19, D03D 15/12, C08L 33/06

(54) **FIRE RETARDANT FABRIC AND/OR APPAREL**
FEUERFESTE FASER UND/ODER KLEIDUNG
TISSU ET/OU OU VÊTEMENT IGNIFUGE

(30) Priority: 16.04.2009 US 170018 P; 15.04.2010 US 760760
(43) Date of publication of application: 22.02.2012
(73) Proprietor: Celanese International Corporation, Dallas, TX 75234-6034 (US)
(72) Inventor: SCHOOTS, Harrie, P., Houston TX 77098-3811 (US); EICKEN, Dalia, I., Houston TX 77009 (US); NGUYEN, Vinh, V., Pearland TX 77581 (US); YBARRA, Arnold, League City TX 77573 (US)
(74) Representative: Braun, André jr.
(86) International application number: PCT/US2010/031326
(87) International publication number: WO 2010/121086

(56) References cited:
- EP-A1- 0 570 233
- JP-A- 9 095 630
- JP-A- 9 310 272
- JP-A- 11 228 754
- US-A- 4 446 202
- US-A- 4 876 142
- US-A- 5 155 167
- US-A- 5 629 370
- US-A- 5 727 401
- US-A1- 2007 160 780

## Description

### FIELD OF THE INVENTION

The invention relates to the use of a polymer containing primary and secondary alcohols that may contain functional groups, in addition to the optional use of vinyl acetate emulsions, vinyl acrylic emulsion, acrylic and or vinyl acetate copolymer emulsions for fire retardant fabric and or apparel.

### BACKGROUND OF THE INVENTION

There is a long standing need to develop efficient, functional, comfortable and non-toxic fire retardant compositions which may be used to impart or improve the fire retardant properties of various materials including fabrics.

The introduction of new fire safety standards and laws has been an influential factor within the flame retardant market. The new standards and laws will influence the various application areas such as the plastic, textile, coating, wood and electronic industries. Manufacturers must improve the flame retardant characteristics of thousands of products such as electronic equipment, plastics, textiles and construction materials. Additionally, manufacturers must substitute old fire retardant materials and methods with environmentally friendly types of flame retardants.

One of the earliest flame retardants used on fabrics and textiles were polychlorinated biphenyls (PCBs). However, PCBs were banned in the 1970's when it was discovered that they were toxic. Industries then shifted to using brominated and halogenated flame retardants instead. These are now receiving closer scrutiny due to fears that toxic substances may be absorbed through the skin of individuals wearing garments treated with brominated and halogenated flame retardants. The European Union has banned several types of polybrominated diphenyl ethers (PDBEs) as of 2008, 10 years after Sweden discovered that they were accumulating in breast milk. In addition to health hazards, fabric/garment hand is negatively affected by halogenated finishing chemistry.

It is clear that within the textile industry, halogenated flame retardants which rely on bromine and chlorine must be replaced due to the environmental and health problems associated with them. At the same time, the replacement products must meet the strict government standards regarding the flammability of apparel textiles set forth in 16 CFR 1610.

Hence, a need exists for a fire retardant fabric which is environmentally friendly, comfortable, and safe to the individual wearing the fabric. A need also exists for a fire retardant composition having at least the same characteristics as the previously mentioned fire retardant fabric.

### SUMMARY OF THE INVENTION

A fire retardant fabric or garment comprising: a fabric or garment and a fire retardant composition including a polyvinyl alcohol copolymer, a vinyl acetate copolymer an acrylic emulsion, and vinyl acrylic emulsion or a combination thereof.

### BRIEF DESCRIPTION OF THE DRAWINGS

Figure 1 is a graphical illustration of the data from Table 1.
Figure 2 is a graphical illustration of the data from Tables 2 and 3.
Figure 3 is a graphical illustration of the data from Table 4.

### DETAILED DESCRIPTION

The present invention specifically relates to a method for producing a fire retardant fabric or garment comprising the steps of providing a fabric or garment; and preparing a fire retardant composition including a polyvinyl alcohol copolymer and an acrylic emulsion as further defined in the present description and treating said fabric or garment with said fire retardant composition. The present invention further refers to the fire retardant composition for treating a fabric or garment comprising: a polyvinyl alcohol copolymer and an acrylic emulsion,

Fabric, as used herein, refers to a planar textile structure produced by interlacing fibers, filaments, or yarns. A fabric may be a woven, knit, or nonwoven structure. Fabrics may be comprised of materials which include, but are not limited to, natural fibers, synthetic fibers (such as acrylic, polyester) or combinations thereof. Additionally, the fabric may have any surface texture which may include, but is not limited to, smooth, textured, raised, raised-fiber, or combinations thereof. Examples of raised or raised-surface fabrics include, but are not limited to, fleece, terry cloth, and napped terry cloth. Garment, as used herein, refers to any article which may be created or constructed using one or more fabrics or yarns.

Fire retardant, as used herein, refers to a material that can be applied to a fiber, yarn, fabric, or other textile item (i.e., garment) during processing to reduce its flammability. A fire retardant may also be incorporated into a textile fiber during manufacture. Flame resistant is a term used to describe a material that burns slowly or is self-extinguishing after removal of an external source of ignition. A fabric or yarn can be flame resistant with fire retardants as well as the innate properties of the fiber, the twist level of the yarn, the fabric construction, or because of a combination of these factors.

Fire retardant composition, as used herein, refers to a chemical composition which may be applied to a fabric, fiber or other textile item during manufacture of the yarn, fabric, or the garment, to reduce its flammability. A fire retardant may also be incorporated into a textile fiber during manufacture. More specifically, a fire retardant composition may be comprised of a polyvinyl alcohol copolymer or a polyvinyl alcohol copolymer emulsion which is discussed in greater detail below.

The polymer mentioned above may have the following molecular structure: 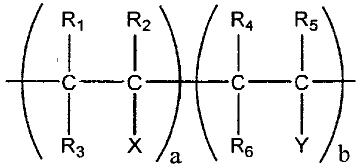 wherein: R1 - R6 being selected from the group comprising: hydrogen, C₁ - C₄ alkyl, C₁ - C₄ alkoxy, acetate, hydroxyl, carbocyclic, heterocyclic or combinations thereof); and X and Y being selected from the group comprising: hydroxyl, acetate, amine, amide, sulfonate, carboxylate, heterocyclic or combinations thereof.

For the instant invention, any known process may be utilized in order to synthesize the polyvinyl alcohol copolymers. For example, the polyvinyl alcohol copolymers may be formed through processes which include, but are not limited to, free radical polymerization, grafting or redox initiation. Polyvinyl alcohol copolymers are described in U.S. Patent No. 5,300,566 and U.S. Patent No. 5,632,977, both of which are incorporated herein by reference.

In one embodiment, a copolymer of polyvinyl alcohol and N-vinyl formamide is formed by polymerizing a vinyl acetate monomer and an N-vinyl formamide monomer and then saponifying a copolymer of vinyl acetate and N-vinyl formamide. For example, a copolymer of vinyl acetate and N-vinyl formamide may be formed by combining the monomers within a reactor in the presence of a free radical initiator and an alcohol, such as methanol. The resulting reaction yields an intermediate vinyl acetate random copolymer containing vinyl formamide groups in an amount from about 1 mole percent to about 50 mole percent.

The resulting vinyl acetate and N-vinyl formamide copolymer is then subjected to saponification. The copolymer is saponified by subjecting the copolymer to heat in the presence of an alkali material. The alkali material may be selected from the group which includes, but is not limited to, any suitable base such as sodium hydroxide, potassium hydroxide, or an alkali metal alkolate. Saponification can be carried out in a continuous system, a semi-batch system, or in a batch system. In one embodiment, an alkali may be added to one of the above described copolymers in a caustic mole ratio (CMR, ratio of base to acetate groups on the polymer) in an amount from about 0.01 % to about 0.1 %. The copolymer is then heated to a temperature of from about 20°C to about 50°C and for a period of time of from about 5 minutes to about 24 hours. During saponification, the vinyl acetate is converted into a vinyl alcohol. The degree of saponification may be controlled and adjusted by controlling the saponification conditions. However, it is common that 95% or more of the available vinyl acetate units are converted into vinyl alcohol.

After saponification, the resulting product can be subjected to various washing steps in order to remove any acetates or other impurities. The resulting polyvinyl alcohol and N-vinyl formamide copolymer can have the following general formula:

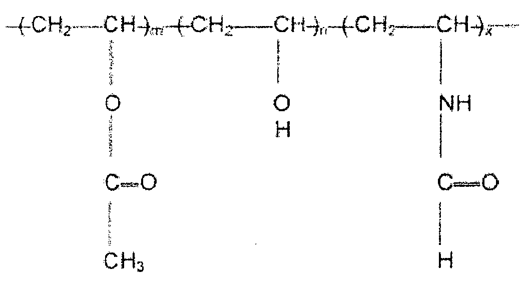

Where: m is from about 0 to about 20 mole %; n is from about 50 mole % to about 99.9 mole %; and x is from about 0.1 mole % to about 50 mole %. The above copolymer may have a molecular weight in the range of 10,000 to 500,000, more preferably in the range of 20,000 to 200,000. In another embodiment, m is about 15 mole %.

As shown above, the copolymer can be formulated to only contain free hydroxyl groups and free amide groups. Copolymers made according to the above formula may be used in accordance with the instant invention and have been found to provide specific advantages in some embodiments. For example, the above described copolymer is well suited for blending with vinyl emulsions.

In another embodiment, the above polyvinyl alcohol and N-vinyl formamide copolymer can be further hydrolyzed by either an acid or a base in order to incorporate amine groups into the copolymer. The hydrolysis of the polyvinyl alcohol and N-vinyl formamide copolymer may be conducted in a continuous system, a semi-batch system, or in a batch system in the presence of an acid or base to serve as a catalyst. Hydrolysis can be conducted on the copolymer in a slurry in the presence of a solvent. The solvent may comprise an alcohol, such as methanol. Of particular advantage, hydrolysis can be controlled in order to produce a copolymer having properties tailored to a particular application. Thus, the hydrolysis can be either substantially complete or partial.

When hydrolysis of the copolymer occurs in the presence of a base, the base may be selected from a group which includes, but is not limited to, an alkali hydroxide or an alkaline earth hydroxide. In one embodiment, hydrolysis is carried out in the presence of either sodium hydroxide or potassium hydroxide. The base is present in an amount from about 0.5 to about 3 times the stoichiometric quantity of N-vinyl formamide groups present. Hydrolysis can also be carried out at elevated temperatures, such as from about 50 to about 80°C. The resulting product can be recovered by filtration or solvent evaporation. In another embodiment, the base is present in an amount from about 1 to about 1.5 times the stoichiometric quantity of N-vinyl formamide groups present.

Hydrolysis of the polyvinyl alcohol and N-vinyl formamide copolymer may also occur in the presence of various acids which include, but are not limited to, halogen acids, citric acid, succinic acid, trifluoroacetic acid and methane sulfonic acid. In one embodiment, hydrolysis is carried out in the presence of hydrochloric acid. Acid hydrolysis may be conducted at a temperature of from about 15°C to about 80°C. The acid may be present in an amount from about 0.5 to about 3 times the stoichiometric amount of N-vinyl formamide groups present. In another embodiment, the acid may be present in an amount from about 1 to about 1.5 times the stoichiometric amount of N-vinyl formamide groups present. Acid hydrolysis may also be conducted in a methanol suspension.

After hydrolysis, a copolymer having the following formula can be formed: 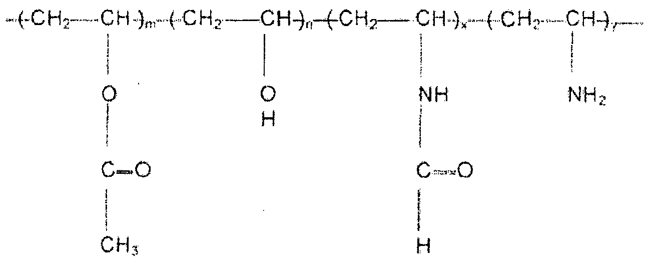 Where: m is from about 0 mole % to about 20 mole %; n is from about 50 mole % to about 99.9 mole %; x is from about 0.1 mole % to about 50 mole %; and y is from about 0.1 mole % to about 50 mole %. The above copolymer may have a molecular weight in the range of 10,000 to 500,000, more preferably in the range of 20,000 to 200,000. In another embodiment, m is about 15 mole %.

Another embodiment of the instant invention relates to a fire retardant fabric which is comprised of a fabric and a fire retardant composition. The fire retardant composition is comprised of a polyvinyl alcohol copolymer with a vinyl emulsion.

Emulsion, as used herein, refers to a mixture of two or more immiscible liquids held in suspension by small percentages of substances called emulsifiers. Emulsifiers may be either a natural or a synthetic compound. Natural compounds include proteins, carbohydrate polymers and/or fatty acids. Synthetic compounds include long-chain alcohols, vinyl acrylics, vinyl acetates, and vinyl acetate ethylenes. Emulsifiers may include, but are not limited to, surfactant stabilized vinyl acrylic emulsions, vinyl acetate emulsions, vinyl acetate ethylene emulsions, or combinations thereof.

Rate of Flammability, as used herein, refers to a 3-tier ratings system which classifies a fabric's flammability in relation to both the surface type of the fabric and time. The government standards regarding the flammability of apparel textiles are set forth in 16 CFR 1610 as well as the ASTM D 1230-94 and are herein incorporated by reference. A smooth fabric requires a time of flame spread to be 3.5 seconds or more to qualify as Class 1. If the time of flame spread for a smooth fabric is less than 3.5 seconds, then it will qualify as Class 3. For a raised-fiber fabric, a time of flame spread must be 7.0 seconds or more to qualify as Class 1, between 4.0 and 7.0 seconds to qualify as Class 2, and less than 4.0 seconds to qualify as Class 3.

The instant invention may be realized in multiple different embodiments. One particular embodiment of the instant invention may comprise a fire retardant fabric comprised of a fabric and a fire retardant composition which includes a polyvinyl alcohol copolymer and a vinyl emulsion. The polyvinyl alcohol copolymer of the fire retardant composition is a copolymer of polyvinyl alcohol and N-vinyl formamide having a molecular weight in the range of 10,000 to 60,000 and having the following molecular structure: 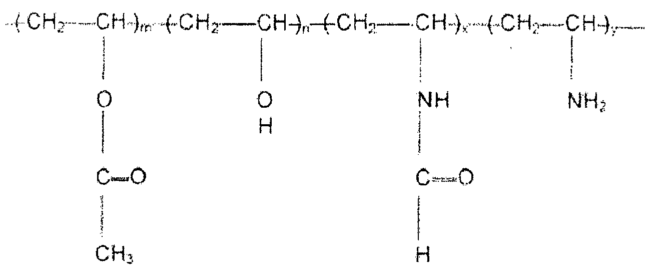 Where: m = 0; n = 90-98; x = 0; and y = 2-10. In another embodiment, m = 0; n = 92-96; x = 0; and y = 4-8. In still another embodiment, m = 0; n = 94; x = 0; and y = 6. The vinyl emulsion included in this formulation is a surfactant stabilized vinyl acrylic emulsion.

In another embodiment, the instant invention may comprise a fire retardant fabric comprised of a fabric and a fire retardant composition which is comprised of a polyvinyl alcohol copolymer and a vinyl emulsion. The polyvinyl alcohol copolymer of the fire retardant composition is a copolymer of polyvinyl alcohol and N-vinyl formamide having a molecular weight in the range of 60,000 to 200,000 and having the following molecular structure: 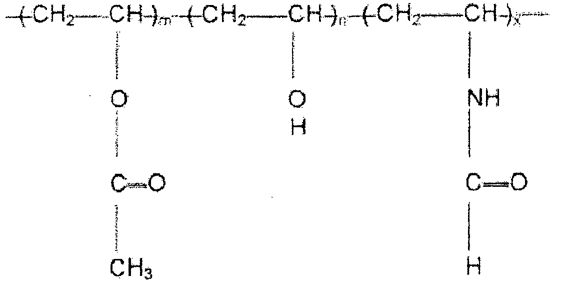 Where m = 0; n = 84-92; and x = 8-16. In another embodiment, m = 0; n = 86-90; and x = 10-14. In still another embodiment, m = 0; n = 88; and x = 12. The vinyl emulsion of the fire retardancy formulation is a surfactant stabilized vinyl acrylic emulsion.

In still another embodiment, the instant invention may comprise a fire retardant composition for fabric comprising a polyvinyl alcohol copolymer or a vinyl emulsion.

In another embodiment, the instant invention may comprise a fire retardant composition for fabric comprising a polyvinyl alcohol copolymer having the following molecular structure: 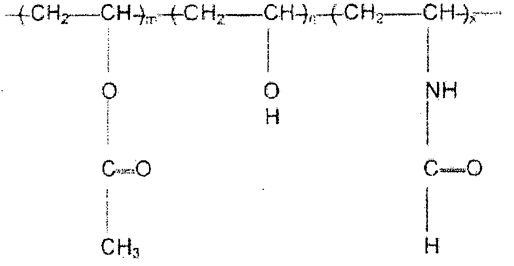 Where: m = from about 0 to about 15 mole %; n = about 50 to about 99.9 mole %; and x = about 0.1 to about 50 mole %. The above copolymer may have a molecular weight in the range of 10,000 to 500,000, more preferably in the range of 20,000 to 200,000.

In another embodiment, the instant invention may comprise a fire retardant composition for fabric comprising a polyvinyl alcohol copolymer having the following molecular structure: 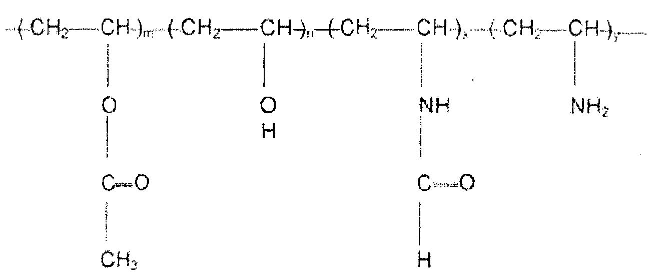 Where: m = from about 0 to about 15 mole %; n = from about 50 to about 99.9 mole %; x = from about 0 to about 50 mole %; and y = from about 0.1 to about 50 mole %. The above copolymer may have a molecular weight in the range of 10,000 to 500,000, more preferably in the range of 20,000 to 200,000.

Another embodiment of the instant invention relates to a fire retardant composition. The fire retardant composition is comprised of a polyvinyl alcohol copolymer with a vinyl emulsion. Vinyl emulsions may include, but are not limited to, surfactant stabilized vinyl acrylic emulsions, vinyl acetate emulsions, vinyl acetate ethylene emulsions, or combinations thereof.

Another particular embodiment of the instant invention may comprise a fire retardant composition which is comprised of a polyvinyl alcohol copolymer and vinyl emulsion. The polyvinyl alcohol copolymer of the fire retardant composition is a copolymer of polyvinyl alcohol and N-vinyl formamide having a molecular weight in the range of 10,000 to 60,000 and having the following molecular structure: 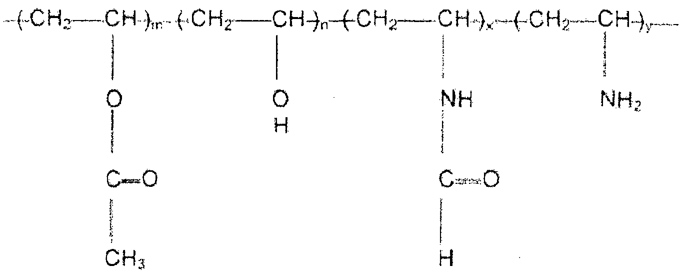 Where: m = 0; n = 90-98; x = 0; and y = 2-10. In another embodiment, m = 0; n = 92-96; x = 0; and y = 4-8. In still another embodiment, m = 0; n = 94; x = 0; and y = 6. The vinyl emulsion is a surfactant stabilized vinyl acrylic emulsion.

In another embodiment, the instant invention may comprise a fire retardant composition which is comprised of a polyvinyl alcohol copolymer and a vinyl emulsion. The polyvinyl alcohol copolymer of the fire retardant composition is a copolymer of polyvinyl alcohol and N-vinyl formamide having a molecular weight in the range of 60,000 to 200,000 and having the following molecular structure: 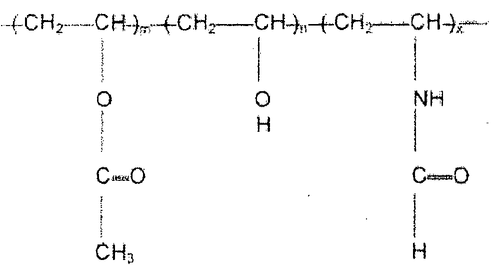 Where m = 0; n = 84-92; and x = 8-16. In another embodiment, m = 0; n = 86-90; and x = 10-14. In still another embodiment, m = 0; n = 88; and x = 12. The vinyl emulsion is a surfactant stabilized vinyl acrylic emulsion.

In yet another embodiment, the instant invention may comprise a fire retardant composition which is comprised of a polyvinyl alcohol copolymer and a vinyl emulsion. The polyvinyl alcohol copolymer of the fire retardant composition is comprised of a polyvinyl alcohol and N-vinyl formamide copolymer having a molecular weight in the range of 10,000 to 60,000 and having the following molecular structure: 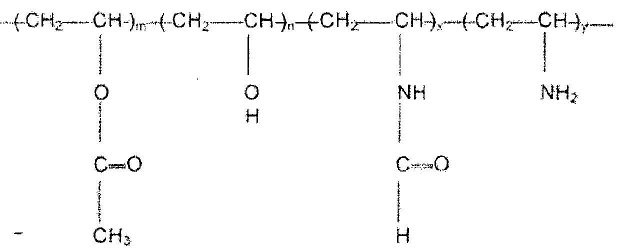 Where: m = 0; n = 84-92; x = 0; and y = 8-16. In another embodiment, m = 0; n = 86-90; x = 0; and y = 10-14. In still another embodiment, m = 0; n = 88; x = 0; and y = 12. The vinyl emulsion of the said formulation is a surfactant stabilized vinyl acrylic emulsion. The fire retardant composition of the above embodiment also represents an additional embodiment of the instant invention.

In yet another embodiment, the instant invention may comprise a fire retardant composition which is comprised of a polyvinyl alcohol copolymer and vinyl emulsion. The polyvinyl alcohol copolymer of the fire retardant composition is comprised of a polyvinyl alcohol and N-vinyl formamide copolymer having a molecular weight in the range of 60,000 to 200,000 and having the following molecular structure: 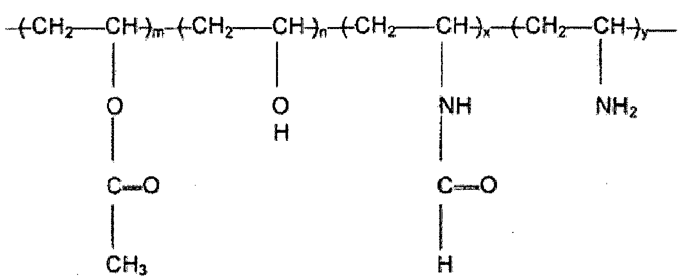 Where m = 0; n = 90-98; x = 0; and y = 2-10. In another embodiment, m = 0; n = 92-96; x = 0; and y = 4-8. In still another embodiment, m = 0; n = 94; x = 0; and y = 6. The vinyl emulsion of the composition is a surfactant stabilized vinyl acrylic emulsion. The fire retardant composition of the above embodiment also represents an additional embodiment of the instant invention.

The instant invention, as described herein above, refers to a method for producing a fire retardant fabric or garment which comprises the steps of providing a fabric or garment and treating the fabric or garment with a fire retardant composition including a polyvinyl alcohol copolymer and/or a vinyl emulsion as previously described in any of the preceding embodiments or blends thereof.

The instant invention also includes a method for producing a fire retardant fabric or garment which comprises the steps of providing a fabric or garment; preparing a fire retardant composition including a polymer containing primary and secondary alcohols that may contain functional groups, a vinyl acetate emulsion, a vinyl acrylic emulsion, an acrylic, a vinyl acetate copolymer emulsion, or combinations thereof; treating the fabric or garment with the fire retardant composition; and drying and/or curing the fabric, or garment.

In one embodiment of the above method, the polyvinyl alcohol copolymer has the following molecular structure: 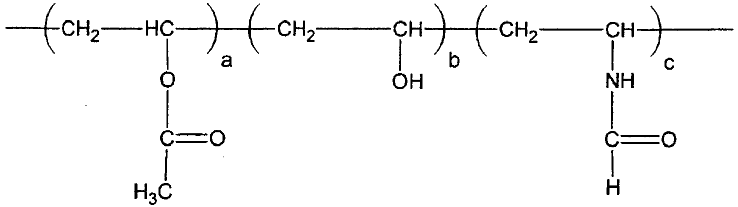 wherein: a = from about 0 to about 20 mole %; b = about 50 to about 99.9 mole %; c = about 0.1 to about 50 mole %; and wherein said polyvinyl alcohol copolymer has a molecular weight in the range of 10,000 to 500,000.

In another embodiment of the above method, the polyvinyl alcohol copolymer has the following molecular structure: 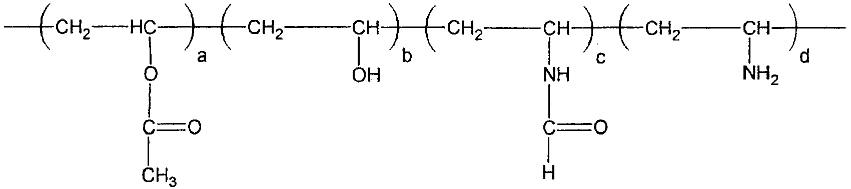 wherein: a = from about 0 to about 20 mole %; b = from about 50 to about 99.9 mole %; c = from about 0.1 to about 50 mole %; d = from about 0.1 to about 50 mole %; and wherein said polyvinyl alcohol copolymer has a molecular weight in the range of 10,000 to 500,000.

In still another embodiment of the above method, the fire retardant composition is comprised of a polyvinyl alcohol copolymer with an emulsion. The emulsion may be selected from the group comprising: a vinyl acrylic emulsion, an acrylic emulsion, a vinyl acetate emulsion, a vinyl acetate ethylene emulsion, or combinations thereof.

In yet another embodiment of the above method, the fabric or garments may be comprised of: natural fiber yarn, synthetic fiber yarn or blends thereof. Additionally, the fabric may have a smooth surface, a textured surface, a raised surface, a raised-fiber surface, or combinations thereof. In still another embodiment of the above method, the fire retardant fabric may be classified as either a Class 1 or Class 2 Rate of Flammability.

In one embodiment of the above method, the polyvinyl alcohol copolymer is a copolymer of polyvinyl alcohol and N-vinyl formamide having a molecular weight in the range of 10,000 to 60,000 and having the following molecular structure: 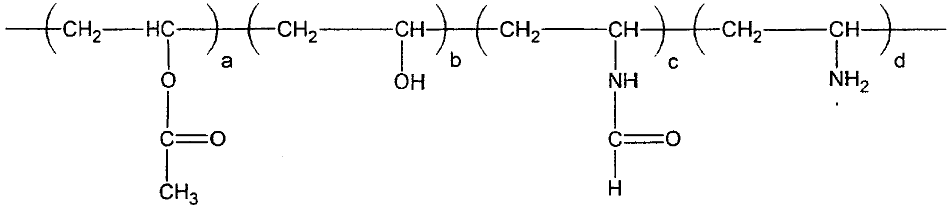 wherein: a = 0; b = 80-98; c = 0 - 5; and d = 2-20; and the emulsion is an acrylic emulsion. In another embodiment, a = 0; b = 90-98; c = 0 - 5; and d = 2-10, a = 0; b = 92-96; c = 0 - 5; and d = 4-8, or a = 0; b = 94; c = 0 - 5; and d = 6.

In another embodiment of the above method, the polyvinyl alcohol copolymer is a copolymer of polyvinyl alcohol and N-vinyl formamide having a molecular weight in the range of 10,000 to 60,000 and having the following molecular structure: 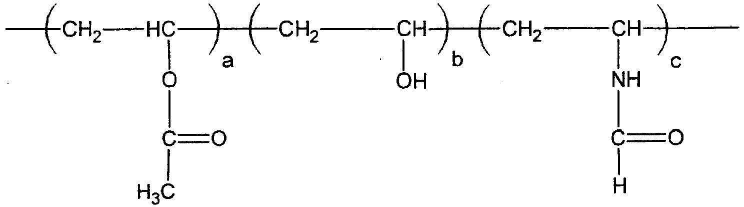 wherein a = 0; b = 84-92; c = 8-16; and the emulsion is an acrylic emulsion. In another embodiment, a = 0; b = 86-90; c = 10-14, or a = 0; b = 88; c = 12.

Any of the above embodiments may further comprise a finishing liquor which includes wetting agents, anti-foam, softening agents, compatibilizers, starches, chelating agents, fixing agents, buffers, coating agents, binders, latexes, release finishes, enzymes, optical brighteners, durable press agents, anti-microbial agents, uv-stabilizers and, or combinations thereof.

The polymer described in the method above may have the following molecular structure: 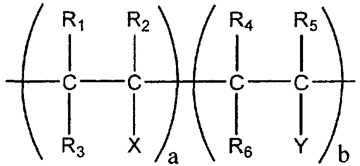 wherein: R1 - R6 being selected from the group comprising: hydrogen, C₁ - C₄ alkyl, C₁ - C₄ alkoxy, acetate, hydroxyl, carbocyclic, heterocyclic or combinations thereof); and X and Y being selected from the group comprising: hydroxyl, acetate, amine, amide, sulfonate, carboxylate, heterocyclic or combinations thereof. The method described above may include any embodiment of the fire retardant composition mentioned previously.

### EXAMPLES

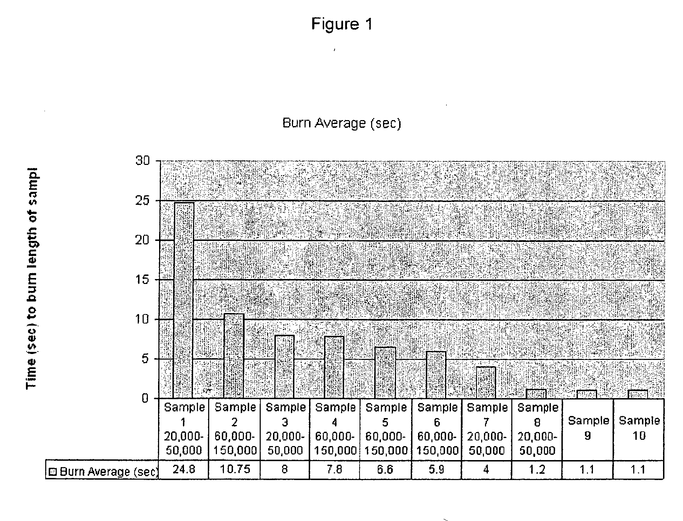

The following examples further illustrate the instant invention. The fire retardant formulations set forth in Table 1 were applied to terry cloth fabric by a batch exhaustion technique. Thereafter the treated fabric was subjected to testing according to ASTM D 1230-94 using an SDL Atlas Ltd. M223G AFC Auto 45° Flame Chamber (Instruction Manuals Doc P/N 14120500 and Doc P/N 18306400 were utilized). The results of these experimental trials are set forth in Table 1 and illustrated in Figure 1.

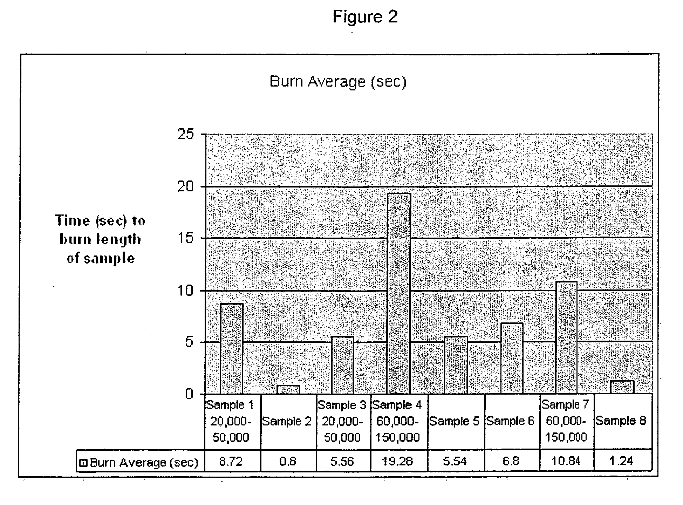

The fire retardant formulations set forth in Tables 2 and 3 were applied to terry cloth fabric by a batch exhaustion technique. Thereafter the treated fabric was subjected to testing according to ASTM D 1230-94 using an SDL Atlas Ltd. M223G AFC Auto 45° Flame Chamber (Instruction Manuals Doc P/N 14120500 and Doc P/N 18306400 were utilized). The results of these experimental trials are set forth in Tables 2 and 3 and illustrated in Figure 2.

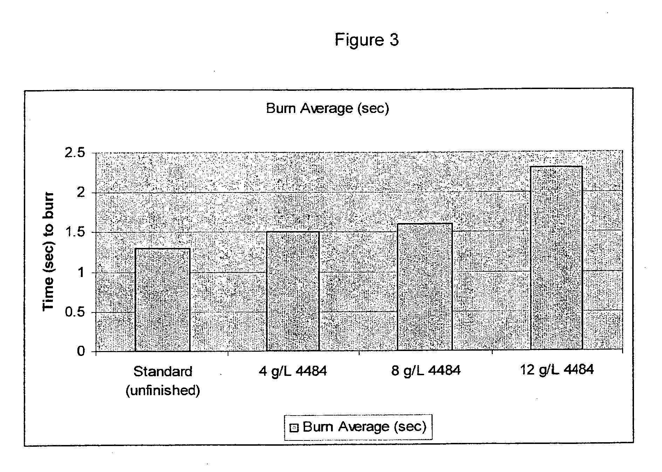

The fire retardant formulations set forth in Table 4 were applied to fleece fabric by a batch exhaustion technique. Thereafter the treated fabric was subjected to testing according to ASTM D 1230-94 using an SDL Atlas Ltd. M223G AFC Auto 45° Flame Chamber (Instruction Manuals Doc P/N 14120500 and Doc P/N 18306400 were utilized). The results of these experimental trials are set forth in Table 4 and illustrated in Figure 3.

**TABLE 1:**

| | | | **Specimen # 1** | | **Specimen # 2** | | |
|---|---|---|---|---|---|---|---|
| **Sample Number and Molecular Weight** | **Formula** | | **Time of Flame Spread (sec)** | **Burn Code** | **Time of Flame Spread (sec)** | **Burn Code** | **Burn Average (sec)** |
| Sample 1 10,000-60,000 | 6% vinyl amine, 94% vinyl alcohol / acrylic | 4g/L | | | | | |
| | | 4g/L | 21.6 | SFBB | 28.0 | SFBB | 24.8 |
| Sample 2 60,000-200,000 | 12% N-vinyl formamide, 88% vinyl alcohol/ acrylic | 4g/L | | | | | |
| | | 4g/L | 6.2 | SFBB | 15.3 | SFBB | 10.75 |
| Sample 3 10,000-60,000 | 12% vinyl amine, 88% vinyl alcohol/ | 4g/L | | | | | |
| | acrylic | 4g/L | 5.9 | SFBB | 10.1 | SFBB | 8 |
| Sample 4 60,000-200,000 | 6% vinyl amine, 94% vinyl alcohol/ acrylic | 4g/L | | | | | |
| | | 4g/L | 2.6 | SFBB | 13.0 | SFBB | 7.8 |
| Sample 5 60,000-200,000 | 12% vinyl amine, 88% vinyl alcohol | 8g/L | 1.7 | SFBB | 11.5 | SFBB | 6.6 |
| Sample 6 60,000-200,000 | 12% vinyl amine, 88% vinyl alcohol / acrylic | 4g/L | | | | | |
| | | 4g/L | 10.4 | SFBB | 1.4 | SFBB | 5.9 |
| Sample 7 10,000-60,000 | 12% vinyl amine, 88% vinyl alcohol | 8g/L | 1.3 | SFBB | 6.7 | SFBB | 4 |
| Sample 8 10,000-60,000 | 12% vinyl amine, 88% vinyl alcohol | 15g/L | 1.1 | SFBB | 1.3 | SFBB | 1.2 |
| Sample 9 | control (no treatment) | n/a | 1.1 | SFBB | 1.1 | SFBB | 1.1 |
| Sample 10 | control (no treatment) | n/a | 1.1 | SFBB POI | 1.1 | SFBB | 1.1 |

| | | | | | | | |
|---|---|---|---|---|---|---|---|
| 0.0 SFBB: Time in seconds, surface flash base burn. Base starts burning at points other than that point of impingement. 0.0 SFBB POI: Time in seconds, surface flash base burn. Base starts burning at the point of impingement. | | | | | | | |

Looking at the data from Table 1 above and Figure 1, it is clearly demonstrated that Samples 1 through 4 achieve a Class 1 Rate of Flammability for fabrics having a raised-fiber surface. Additionally, it also demonstrated that Samples 5-7 achieve a Class 2 Rate of Flammability for fabrics having a raised-fiber surface.

**Tables 2 & 3**

| | | | | | **Specimen # 1** | | **Specimen # 2** | | **Specimen # 3** | |
|---|---|---|---|---|---|---|---|---|---|---|
| **Sample Number and Molecular Weight** | **Formula** | | **Initial Height of Pile** | **Height of Pile after Brushing*** | **Time of Flame Spread (sec)** | **Burn Code** | **Time of Flame Spread (sec)** | **Burn Code** | **Time of Flame Spread (sec)** | **Burn Code** |
| Sample 1 20,000-50,000 | 12% vinyl amine, 88% vinyl alcohol /Vinyl acrylic | 0.4g/L | | | 1.9 | SFBB | 1.8 | SFBB | 13.2 | SFBB |
| | | 2g/L | 0.11 | 0.13** | | | | | | |
| Sample 2 | Vinyl acrylic | 2.4g/L | 0.08 | 0.12** | 0.7 | SFBB | 0.5 | SFBB | 0.9 | SFBB |
| Sample 3 20,000-50,000 | 12% vinyl amine, 88% vinyl alcohol | 0.8g/L | 0.11 | 0.13 | 15.2 | SFBB | 1.4 | SFBB | 1 | SFBB |
| Sample 4 60,000-150,000 | 6% vinyl amine, 94% vinyl alchol | 0.8g/L | 0.10 | 0.12 | 7.1 | SFBB | 43 | SFBB | 16.2 | SFBB |
| Sample 5 | Vinyl acrylic | 8g/L | 0.08 | 0.12** | 1.8 | SFBB | 1.3 | SFBB | 4 | SFBB |
| Sample 6 | Vinyl acetate ethylene | 8g/L | 0.08 | 0.11** | 1.9 | SFBB | 1 | SFBB | 1.8 | SFBB |
| Sample 7 60,000-150,000 | 6% vinyl amine 94% vinyl alchol /Vinyl acrylic | 4g/L | | | 11.9 | SFBB | 4.2 | SFBB | 5.8 | SFBB |
| | | 4g/L | 0.11 | 0.12 | | | | | | |
| Sample 8 | Water | | 0.113 | 0.134 | 0.4 | SFBB | 2.9 | SFBB | 0.4 | SFBB |

| | | | | | **Specimen # 4** | | **Specimen # 5** | | | |
|---|---|---|---|---|---|---|---|---|---|---|
| **Sample Number and Molecular Weight** | **Formula** | | **Initial Height of Pile** | **Height of Pile after Brushing *** | **Time of Flame Spread (sec)** | **Burn Code** | **Time of Flame Spread (sec)** | **Burn Code** | **Burn Avg Samples 1-5 (sec)** | |
| Sample 1 20,000-50,000 | 12% vinyl amine, 88% vinyl alcohol vinyl acrylic | 0.4g/L 2g/L | 0.11 | 0.13** | 12.7 | SFBB | 14 | SFBB | 8.72 | |
| Sample 2 | Vinyl acrylic | 2.4g/L | 0.08 | 0.12** | 0.5 | SFBB | 1.4 | SFBB | 0.8 | |
| Sample 3 20,000-50,000 | 12% vinyl amine, 88% vinyl alcohol | 0.8g/L | 0.11 | 0.13 | 6.8 | SFBB | 3.4 | SFBB | 5.56 | |
| Sample 4 60,000-150,000 | 6% vinyl amine, 94% vinyl alchol | 0.8g/L | 0.10 | 0.12 | 15.1 | SFBB | 15 | SFBB | 19.28 | |
| Sample 5 | Vinyl acrylic | 8g/L | 0.08 | 0.12** | 16.6 | SFBB | 4 | SFBB | 5.54 | |
| Sample 6 | Vinyl acetate ethylene | 8g/L | 0.08 | 0.11** | 15.8 | SFBB | 13.5 | SFBB | 6.8 | |
| Sample 7 60,000-150,000 | 6% vinyl amine 94% vinyl alchol/Vinyl acrylic | 4g/L | | | 11 | SFBB | 21.3 | SFBB | 10.84 | |
| | | 4g/L | 0.11 | 0.12 | | | | | | |
| Sample 8 | Water | | 0.113 | 0.134 | 1.4 | SFBB | 1.1 | SFBB | 1.24 | |

| | | | | | | | | | | |
|---|---|---|---|---|---|---|---|---|---|---|
| *to standardize to one length **required more than one brush through | | | | | | | | | | |

- 0.0 SFBB:: Time in seconds, surface flash base burn. Base starts burning at points other than that point of impingement.
- 0.0 SFBB POI:: Time in seconds, surface flash base burn. Base starts burning at the point of impingement.

Looking at the data from Tables 2 and 3 above and Figure 2, it is clearly demonstrated that Samples 1, 4 and 7 achieve a Class 1 Rate of Flammability for fabrics having a raised-fiber surface. Additionally, it also demonstrated that Samples 3, 5 and 6 achieve a Class 2 Rate of Flammability for fabrics having a raised-fiber surface.

**Table 4**

| **Sample Number** | **Finish** | **Time to Burn (sec)** |
|---|---|---|
| Sample 1 | Standard (unfinished) | 1.3 |
| Sample 2 | 4 g/L 4484 | 1.5 |
| Sample 3 | 8 g/L 4484 | 1.6 |
| Sample 4 | 12 g/L 4484 | 2.3 |

The data from Table 4 was obtained using approximately 1 yard of fabric, sewn end to end on which a 20:1 Liquor Ratio was applied (for samples 2-4) using an exhaust process at a run temperature of 155°F (68°C) for 30 minutes. The samples were then dried (tumble dryer) and cured for 2 minutes at 120°F (48°C). The finish employed was an acrylic copolymer (vinyl acrylic) and water mixture.

## Claims

1. A method for producing a fire retardant fabric or garment comprising the steps of:
providing a fabric or garment; and
preparing a fire retardant composition including a polyvinyl alcohol copolymer and an acrylic emulsion;
treating said fabric or garment with said fire retardant composition;
drying and/or curing said fabric or garment, wherein the polyvinyl alcohol copolymer having the following molecular structure: 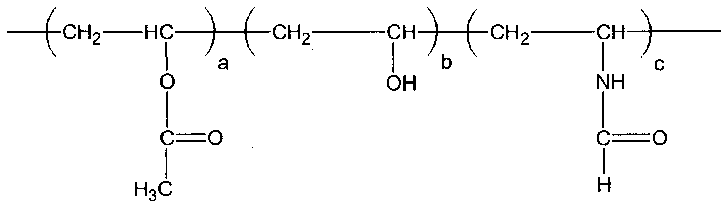 wherein:
a = from about 0 to about 20 mole %;
b = about 50 to about 99.9 mole %;
c = about 0.1 to about 50 mole %; and
wherein said polyvinyl alcohol copolymer having a molecular weight in the range of 10,000 to 500,000.

2. The method of claim 1, wherein the polyvinyl alcohol copolymer having the following molecular structure: 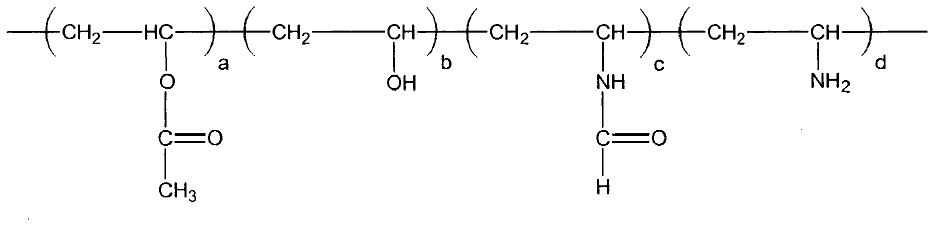 wherein:
a = from about 0 to about 20 mole %;
b = from about 50 to about 99.9 mole %;
c = from about 0.1 to about 50 mole %;
d = from about 0.1 to about 50 mole %; and
wherein said polyvinyl alcohol copolymer having a molecular weight in the range of 10,000 to 500,000.

3. The method of claim 1 wherein said fabric or garments being comprised of: natural fiber yarn, synthetic fiber yarn or blends thereof.

4. The method of claim 1 wherein said fabric having a smooth surface, a textured surface, a raised surface, a raised-fiber surface, or combinations thereof.

5. The method of claim 1 wherein the fire retardant fabric being classified as either a Class 1 or Class 2 Rate of Flammability.

6. The method of claim 2 wherein said polyvinyl alcohol copolymer being a copolymer of polyvinyl alcohol and N-vinyl formamide having a molecular weight in the range of 10,000 to 60,000 and having the following molecular structure: 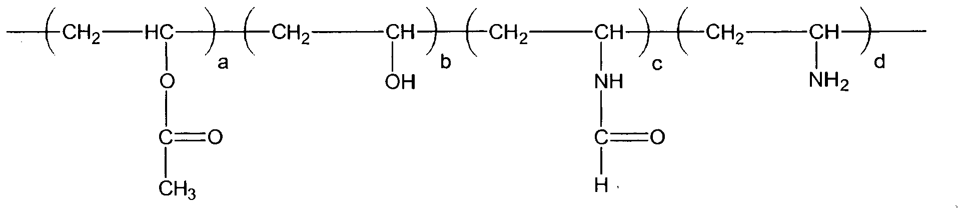 wherein: a = 0; b = 80-98; c = 0 - 5; and d = 2-20; and wherein said emulsion being an acrylic emulsion.

7. The method of claim 1, wherein said polyvinyl alcohol copolymer being a copolymer of polyvinyl alcohol and N-vinyl formamide having a molecular weight in the range of 10,000 to 60,000 and having the following molecular structure: 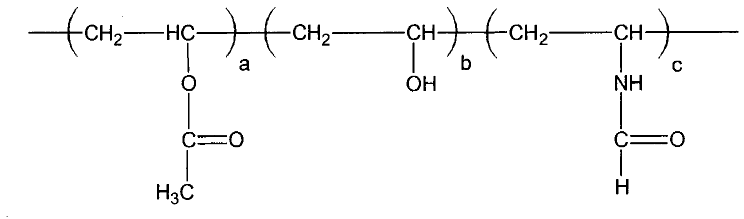 wherein a = 0; b = 84-92; c = 8-16; and wherein said emulsion being an acrylic emulsion.

8. The method of claim 1, wherein the fire retardant composition further comprises a finishing liquor which includes wetting agents, anti-foam, softening agents, compatibilizers, starches, chelating agents, fixing agents, buffers, coating agents, binders, latexes, release finishes, enzymes, optical brighteners, durable press agents, anti-microbial agents, uv-stabilizers and, or combinations thereof.

9. A fire retardant composition for treating a fabric or garment according to any one of the claims 1 to 8 comprising: a polyvinyl alcohol copolymer and an acrylic emulsion, wherein the polyvinyl alcohol copolymer having the following molecular structure: 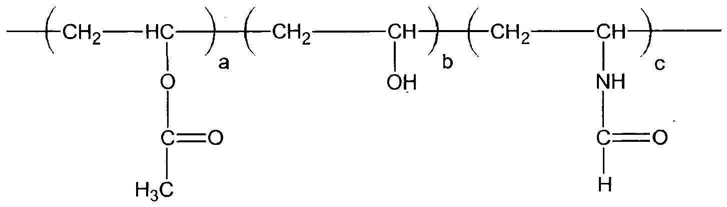 wherein:
a = from about 0 to about 15 mole %;
b = about 50 to about 99.9 mole %;
c = about 0.1 to about 50 mole %; and
wherein said polyvinyl alcohol copolymer having a molecular weight in the range of 10,000 to 500,000.

10. The fire retardant composition of claim 9, wherein the polyvinyl alcohol copolymer having the following molecular structure: 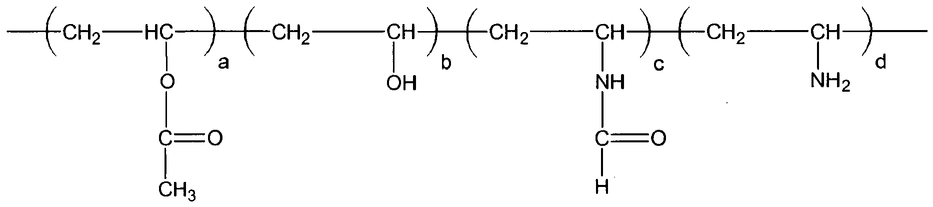 wherein:
a = from about 0 to about 15 mole %;
b = from about 50 to about 99.9 mole %;
c = from about 0 to about 50 mole %;
d = from about 0.1 to about 50 mole %; and
wherein said polyvinyl alcohol copolymer having a molecular weight in the range of 10, 000 to 500,000.

11. The fire retardant composition of claim 9, wherein said acrylic emulsion being selected from the group comprising: a vinyl acrylic emulsion, an acrylic emulsion, or combinations thereof.

12. The fire retardant composition of claim 9, wherein said polyvinyl alcohol copolymer being a copolymer of polyvinyl alcohol and N-vinyl formamide having a molecular weight in the range of 10,000 to 60,000 and having the following molecular structure: 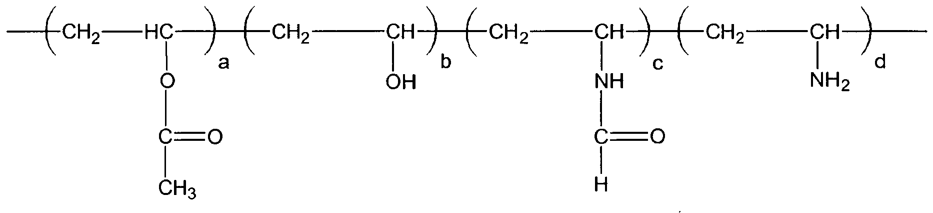 wherein: a = 0; b = 80-98; c = 0 - 5; and y = 2-10; and wherein said emulsion being an acrylic emulsion.

13. The fire retardant composition of claim 9, wherein said polyvinyl alcohol copolymer being a copolymer of polyvinyl alcohol and N-vinyl formamide having a molecular weight in the range of 60,000 to 250,000 and having the following molecular structure: 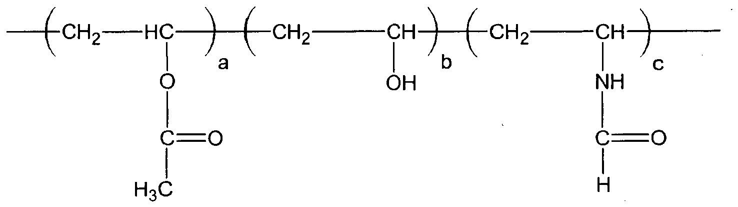 wherein a = 0; b = 84-92; c = 8-16; d = 0; and wherein said emulsion being an acrylic emulsion.

14. The fire retardant composition of claim 9, wherein said polyvinyl alcohol copolymer of said polyvinyl alcohol copolymer emulsion being comprised of a polyvinyl alcohol and N-vinyl formamide copolymer having a molecular weight in the range of 10,000 to 60,000 and having the following molecular structure: 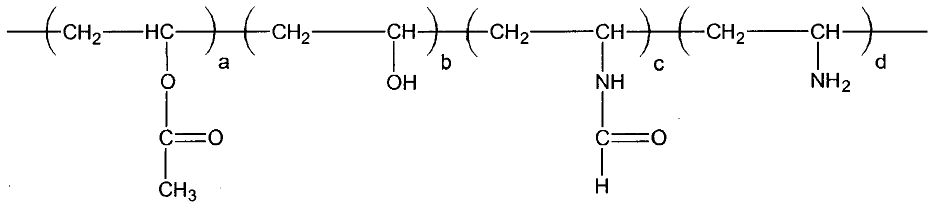 wherein: a = 0; b = 84-92; c = 0 - 5; and d = 8-16; and wherein said emulsion being an acrylic emulsion.

15. The fire retardant composition of claim 9, wherein said polyvinyl alcohol copolymer being comprised of a polyvinyl alcohol and N-vinyl formamide copolymer having a molecular weight in the range of 60,000 to 250,000 and having the following molecular structure: 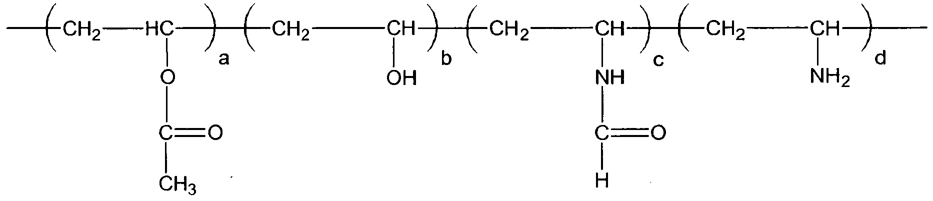 wherein a = 0; b = 90-98; c = 0 - 5; and d = 2-10; and wherein said emulsion being an acrylic emulsion.

## Patentansprüche

1. Verfahren zur Produktion eines flammhemmenden Gewebes oder Kleidungsstücks, wobei das Verfahren die folgenden Schritte umfasst:
Bereitstellen eines Gewebes oder Kleidungsstücks und
Herstellen einer flammhemmenden Zusammensetzung, die ein Polyvinylalkohol-Copolymer und eine Acrylemulsion enthält;
Behandeln des Gewebes oder Kleidungsstücks mit der flammhemmenden Zusammensetzung;
Trocknen und/oder Warmbehandeln des Gewebes oder Kleidungsstücks;
wobei das Polyvinylalkohol-Copolymer die folgende Molekularstruktur aufweist: 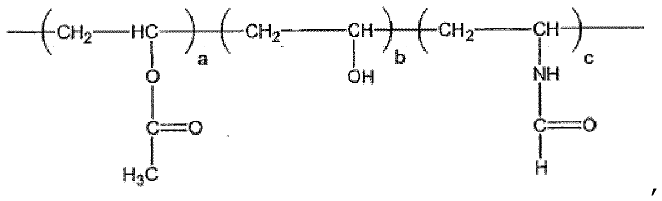 wobei:
a = von etwa 0 bis etwa 20 Mol-%;
b = etwa 50 bis etwa 99,9 Mol-%;
c = etwa 0,1 bis etwa 50 Mol-% und
wobei das Polyvinylalkohol-Copolymer ein Molekulargewicht im Bereich von 10.000 bis 500.000 aufweist.

2. Verfahren nach Anspruch 1, wobei das Polyvinylalkohol-Copolymer die folgende Molekularstruktur aufweist: 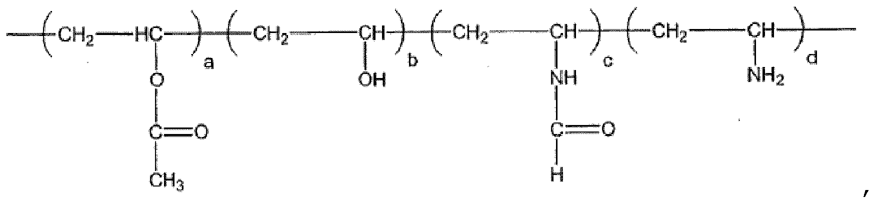 wobei:
a = von etwa 0 bis etwa 20 Mol-%;
b = von etwa 50 bis etwa 99,9 Mol-%;
c = von etwa 0,1 bis etwa 50 Mol-%;
d = von etwa 0,1 bis etwa 50 Mol-% und
wobei das Polyvinylalkohol-Copolymer ein Molekulargewicht im Bereich von 10.000 bis 500.000 aufweist.

3. Verfahren nach Anspruch 1, wobei das Gewebe oder die Kleidungsstücke sich aus folgendem zusammensetzen: Naturfasergarn, Kunstfasergarn oder Gemischen davon.

4. Verfahren nach Anspruch 1, wobei das Gewebe eine glatte Oberfläche, eine texturierte Oberfläche, eine erhabene Oberfläche, eine erhabene Faseroberfläche oder Kombinationen davon aufweist.

5. Verfahren nach Anspruch 1, wobei das flammhemmende Gewebe als entweder eine Entflammbarkeitsklasse 1 oder 2 klassifiziert wird.

6. Verfahren nach Anspruch 2, wobei das Polyvinylalkohol-Copolymer ein Copolymer von Polyvinylalkohol und N-Vinylformamid mit einem Molekulargewicht im Bereich von 10.000 bis 60.000 ist und die folgende Molekularstruktur aufweist: 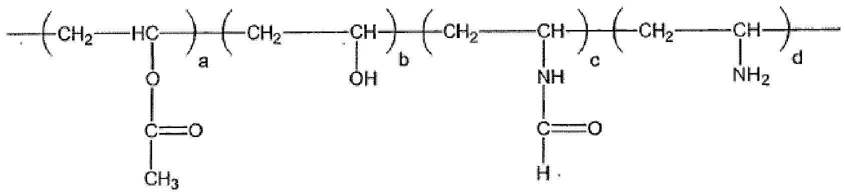 wobei: a = 0; b = 80 - 98; c = 0 - 5 und d = 2 - 20; und wobei die Emulsion eine Acrylemulsion ist.

7. Verfahren nach Anspruch 1, wobei das Polyvinylalkohol-Copolymer ein Copolymer von Polyvinylalkohol und N-Vinylformamid mit einem Molekulargewicht im Bereich von 10.000 bis 60.000 ist und die folgende Molekularstruktur aufweist: 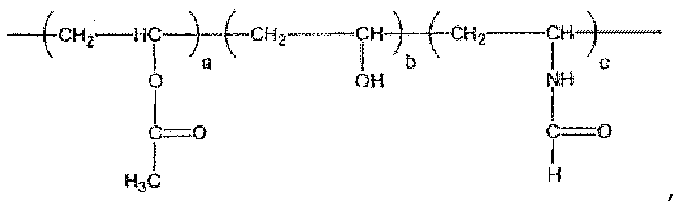 wobei: a = 0; b = 84 - 92; c = 8 - 16; und wobei die Emulsion eine Acrylemulsion ist.

8. Verfahren nach Anspruch 1, wobei die flammhemmende Zusammensetzung weiterhin eine Appreturflotte umfasst, die Benetzungsmittel, Entschäumer, Weichmacher, Verträglichkeitsvermittler, Stärken, Chelatbildner, Fixiermittel, Puffer, Beschichtungsmittel, Bindemittel, Latizes, Release-Ausrüstungen, Enzyme, optische Aufheller, Mittel für Bügelfreiheit, antimikrobielle Mittel, UV-Stabilisatoren und/oder Kombinationen davon beinhaltet.

9. Flammhemmende Zusammensetzung zur Behandlung eines Gewebes oder Kleidungsstücks nach einem der Ansprüche 1 bis 8, die Folgendes umfasst: ein Polyvinylalkohol-Copolymer und eine Acrylemulsion, wobei das Polyvinylalkohol-Copolymer die folgende Molekularstruktur aufweist: 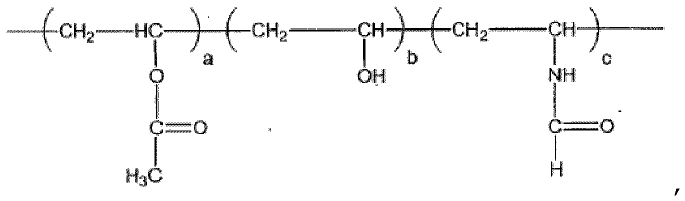 wobei:
a = von etwa 0 bis etwa 15 Mol-%;
b = etwa 50 bis etwa 99,9 Mol-%;
c = etwa 0,1 bis etwa 50 Mol-% und
wobei das Polyvinylalkohol-Copolymer ein Molekulargewicht im Bereich von 10.000 bis 500.000 aufweist.

10. Flammhemmende Zusammensetzung nach Anspruch 9, wobei das Polyvinylalkohol-Copolymer die folgende Molekularstruktur aufweist: 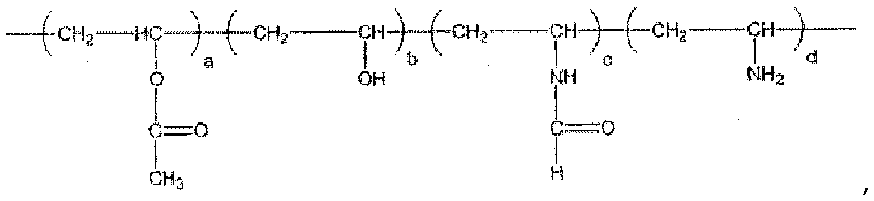 wobei:
a = von etwa 0 bis etwa 15 Mol-%;
b = von etwa 50 bis etwa 99,9 Mol-%;
c = von etwa 0 bis etwa 50 Mol-%;
d = von etwa 0,1 bis etwa 50 Mol-% und
wobei das Polyvinylalkohol-Copolymer ein Molekulargewicht im Bereich von 10.000 bis 500.000 aufweist.

11. Flammhemmende Zusammensetzung nach Anspruch 9, wobei die Acrylemulsion aus der Gruppe ausgewählt ist, die Folgendes umfasst: eine Vinylacrylemulsion, eine Acrylemulsion oder Kombinationen davon.

12. Flammhemmende Zusammensetzung nach Anspruch 9, wobei das Polyvinylalkohol-Copolymer ein Copolymer von Polyvinylalkohol und N-Vinylformamid mit einem Molekulargewicht im Bereich von 10.000 bis 60.000 ist und die folgende Molekularstruktur aufweist: 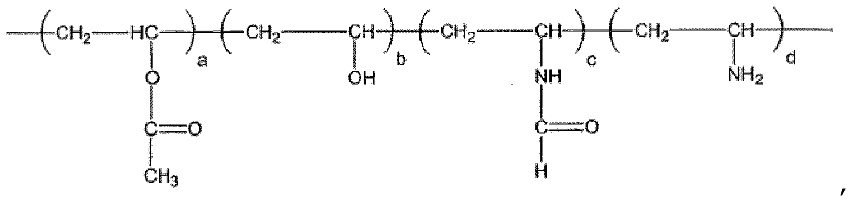 wobei: a = 0; b = 80 - 98; c = 0 - 5 und y = 2 - 10; und wobei die Emulsion eine Acrylemulsion ist.

13. Flammhemmende Zusammensetzung nach Anspruch 9, wobei das Polyvinylalkohol-Copolymer ein Copolymer von Polyvinylalkohol und N-Vinylformamid mit einem Molekulargewicht im Bereich von 60.000 bis 250.000 ist und die folgende Molekularstruktur aufweist: 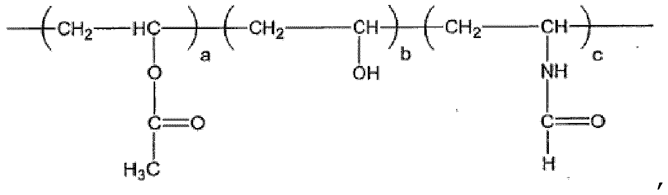 wobei: a - 0; b = 84 - 92; c = 8 - 16; d = 0; und wobei die Emulsion eine Acrylemulsion ist.

14. Flammhemmende Zusammensetzung nach Anspruch 9, wobei das Polyvinylalkohol-Copolymer der Polyvinylalkohol-Copolymer-Emulsion sich aus einem Polyvinylalkohol- und N-Vinylformamid-Copolymer mit einem Molekulargewicht im Bereich von 10.000 bis 60.000 zusammensetzt und die folgende Molekularstruktur aufweist: 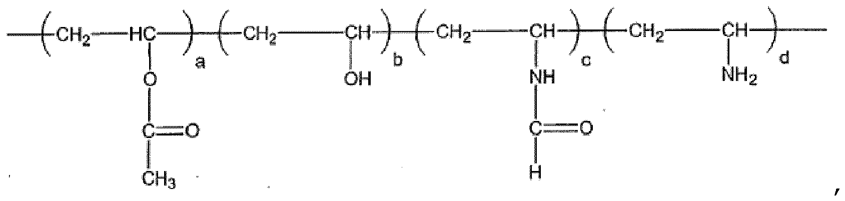 wobei: a = 0; b = 84 - 92; c = 0 - 5 und d = 8 - 16; und wobei die Emulsion eine Acrylemulsion ist.

15. Flammhemmende Zusammensetzung nach Anspruch 9, wobei das Polyvinylalkohol-Copolymer sich aus einem Polyvinylalkohol- und N-Vinylformamid-Copolymer mit einem Molekulargewicht im Bereich von 60.000 bis 250.000 zusammensetzt und die folgende Molekularstruktur aufweist: 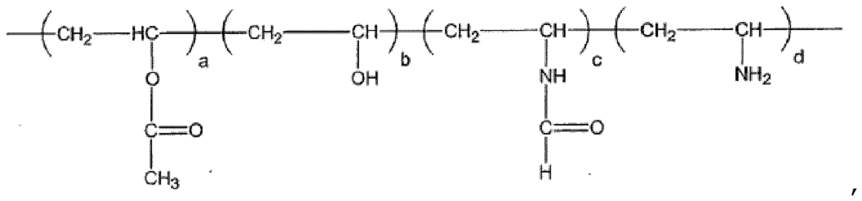 wobei: a = 0; b = 90 - 98; c = 0 - 5 und d = 2 - 10; und wobei die Emulsion eine Acrylemulsion ist.

## Revendications

1. Procédé de fabrication d'un tissu ou vêtement retardateur de flamme comprenant les étapes consistant à :
- se procurer un tissu ou vêtement ; et
- préparer une composition retardatrice de flamme comprenant un copolymère d'alcool polyvinylique et une émulsion acrylique ;
- traiter ledit tissu ou vêtement par ladite composition retardatrice de flamme ;
- sécher et/ou durcir ledit tissu ou vêtement,
le copolymère d'alcool polyvinylique ayant la structure moléculaire suivante : 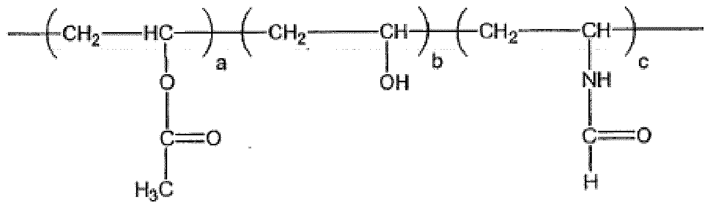 dans laquelle :
- a = d'environ 0 à environ 20 % en moles ;
- b = environ 50 à environ 99,9 % en moles ;
- c = environ 0,1 à environ 50 % en moles ; et
ledit copolymère d'alcool polyvinylique ayant une masse moléculaire dans la plage de 10 000 à 500 000.

2. Procédé selon la revendication 1, dans lequel le copolymère d'alcool polyvinylique a la structure moléculaire suivante : 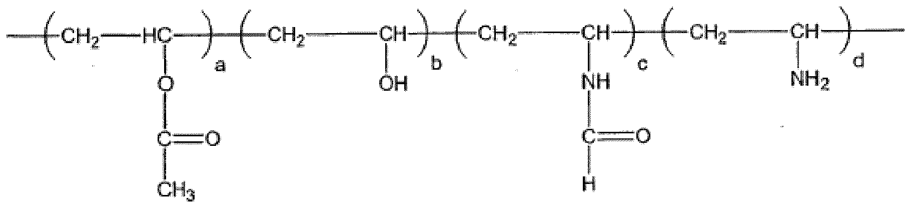 dans laquelle :
- a = d'environ 0 à environ 20 % en moles ;
- b = d'environ 50 à environ 99,9 % en moles ;
- c = d'environ 0,1 à environ 50 % en moles ;
- d = d'environ 0,1 à environ 50 % en moles ; et
ledit copolymère d'alcool polyvinylique ayant une masse moléculaire dans la plage de 10 000 à 500 000.

3. Procédé selon la revendication 1, dans lequel ledit tissu ou lesdits vêtements se composent de : fil de fibre naturelle, fil de fibre synthétique ou leurs mélanges.

4. Procédé selon la revendication 1, dans lequel ledit tissu a une surface lisse, une surface texturée, une surface molletonnée, une surface à fibre grattée ou des combinaisons de celles-ci.

5. Procédé selon la revendication 1, dans lequel le tissu retardateur de flamme est classifié en tant que taux d'inflammabilité soit de Classe 1 soit de Classe 2.

6. Procédé selon la revendication 2, dans lequel ledit copolymère d'alcool polyvinylique est un copolymère d'alcool polyvinylique et de N-vinylformamide ayant une masse moléculaire dans la plage de 10 000 à 60 000 et ayant la structure moléculaire suivante : 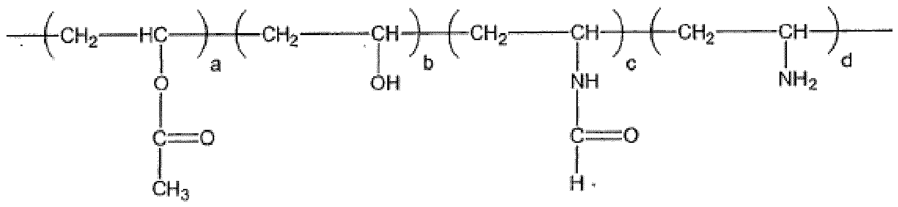 dans laquelle : a = 0 ; b = 80-98 ; c = 0-5 ; et d = 2-20 ; et ladite émulsion étant une émulsion acrylique.

7. Procédé selon la revendication 1, dans lequel ledit copolymère d'alcool polyvinylique est un copolymère d'alcool polyvinylique et de N-vinylformamide ayant une masse moléculaire dans la plage de 10 000 à 60 000 et ayant la structure moléculaire suivante : 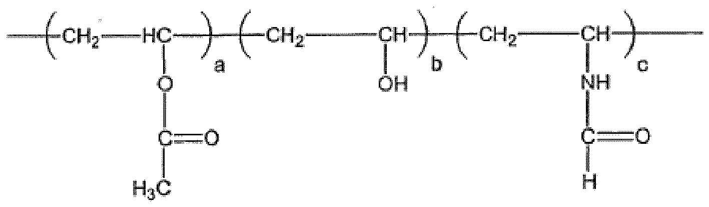 dans laquelle a = 0 ; b = 84-92 ; c = 8-16 ; et ladite émulsion étant une émulsion acrylique.

8. Procédé selon la revendication 1, dans lequel la composition retardatrice de flamme comprend de plus une liqueur de finition qui comprend des agents mouillants, des agents antimousse, des agents d'adoucissage, des agents de compatibilité, des amidons, des agents chélatants, des agents de fixation, des tampons, des agents de revêtement, des liants, des latex, des apprêts de libération, des enzymes, des azurants optiques, des agents de pressage permanent, des agents antimicrobiens, des agents anti-UV et/ou leurs combinaisons.

9. Composition retardatrice de flamme pour traiter un tissu ou un vêtement selon l'une quelconque des revendications 1 à 8 comprenant : un copolymère d'alcool polyvinylique et une émulsion acrylique, le copolymère d'alcool polyvinylique ayant la structure moléculaire suivante : 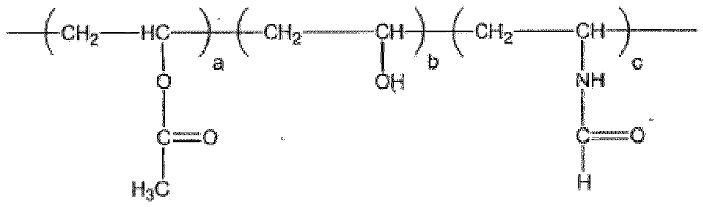 dans laquelle :
- a = d'environ 0 à environ 15 % en moles ;
- b = environ 50 à environ 99,9 % en moles ;
- c = environ 0,1 à environ 50 % en moles ; et
ledit copolymère d'alcool polyvinylique ayant une masse moléculaire dans la plage de 10 000 à 500 000.

10. Composition retardatrice de flamme selon la revendication 9, dans laquelle le copolymère d'alcool polyvinylique a la structure moléculaire suivante : 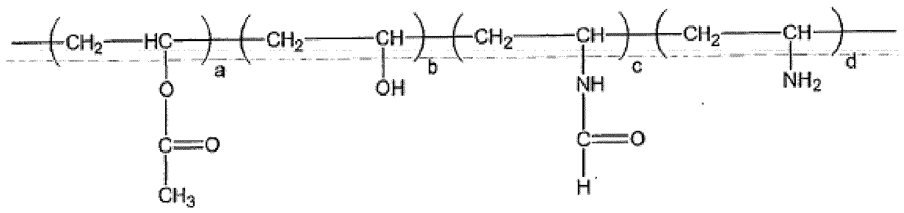 dans laquelle:
- a = d'environ 0 à environ 15 % en moles ;
- b = d'environ 50 à environ 99,9 % en moles ;
- c = d'environ 0 à environ 50 % en moles ;
- d = d'environ 0,1 à environ 50 % en moles ; et
ledit copolymère d'alcool polyvinylique ayant une masse moléculaire dans la plage de 10 000 à 500 000.

11. Composition retardatrice de flamme selon la revendication 9, dans laquelle ladite émulsion acrylique est choisie dans le groupe comprenant : une émulsion vinyl acrylique, une émulsion acrylique ou leurs combinaisons.

12. Composition retardatrice de flamme selon la revendication 9, dans laquelle ledit copolymère d'alcool polyvinylique est un copolymère d'alcool polyvinylique et de N-vinylformamide ayant une masse moléculaire dans la plage de 10 000 à 60 000 et ayant la structure moléculaire suivante : 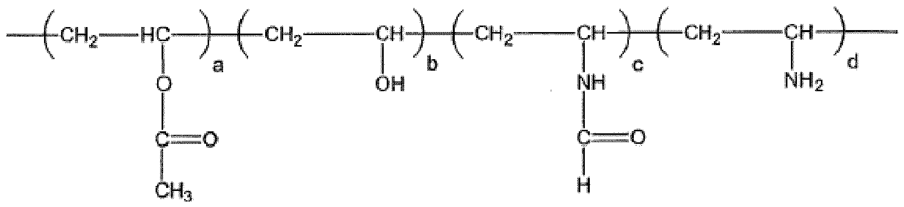 dans laquelle : a = 0 ; b = 80-98 ; c = 0 - 5 ; et y = 2-10 ; et ladite émulsion étant une émulsion acrylique.

13. Composition retardatrice de flamme selon la revendication 9, dans laquelle ledit copolymère d'alcool polyvinylique est un copolymère d'alcool polyvinylique et de N-vinylformamide ayant une masse moléculaire dans la plage de 60 000 à 250 000 et ayant la structure moléculaire suivante : 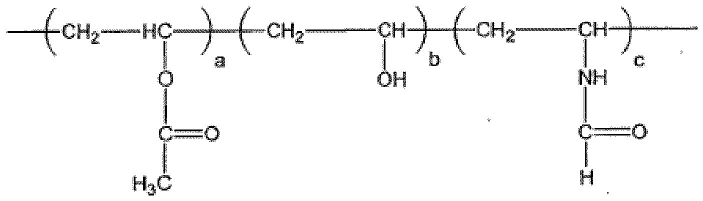 dans laquelle a = 0 ; b = 84-92 ; c = 8-16 ; d = 0 ; et ladite émulsion étant une émulsion acrylique.

14. Composition retardatrice de flamme selon la revendication 9, dans laquelle ledit copolymère d'alcool polyvinylique de ladite émulsion de copolymère d'alcool polyvinylique est constitué d'un copolymère d'alcool polyvinylique et de N-vinylformamide ayant une masse moléculaire dans la plage de 10 000 à 60 000 et ayant la structure moléculaire suivante : 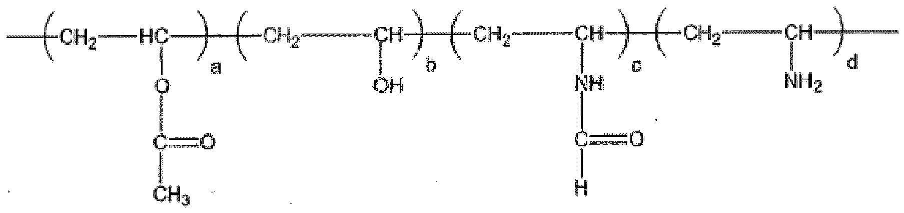 dans laquelle : a = 0 ; b = 84-92 ; c = 0-5 ; et d = 8-16 ; et ladite émulsion étant une émulsion acrylique.

15. Composition retardatrice de flamme selon la revendication 9, dans laquelle ledit copolymère d'alcool polyvinylique est constitué d'un copolymère d'alcool polyvinylique et de N-vinylformamide ayant une masse moléculaire dans la plage de 60 000 à 250 000 et ayant la structure moléculaire suivante : 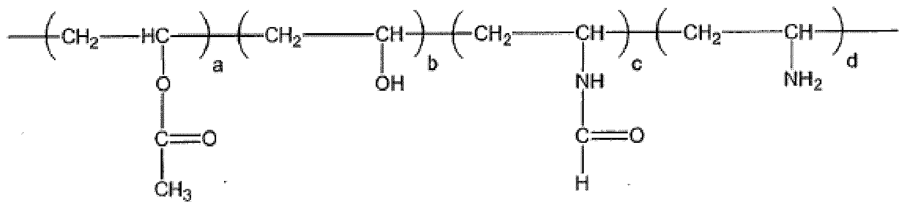 dans laquelle a = 0 ; b = 90-98 ; c = 0-5 ; et d = 2-10 ; et ladite émulsion étant une émulsion acrylique.
